# EUROPÄISCHE PATENTSCHRIFT

(11) **EP 3 790 757 B1**
(45) Veröffentlichungstag und Bekanntmachung des Hinweises auf die Patenterteilung: **28.10.2026**
(21) Anmeldenummer: 19778801.1
(22) Anmeldetag: 06.09.2019
(51) Int. Cl.: B60L 5/00

(54) **STROMABNEHMER FÜR EIN NICHT SPURGEBUNDENES, ELEKTRISCH ANGETRIEBENES FAHRZEUG**
CURRENT COLLECTOR FOR A NON-RAILBOUND ELECTRICALLY DRIVEN VEHICLE
PANTOGRAPHE POUR UN VÉHICULE À TRACTION ÉLECTRIQUE NON GUIDÉ

(30) Priorität: 13.09.2018 DE 102018215593
(43) Veröffentlichungstag der Anmeldung: 17.03.2021
(73) Patentinhaber: Siemens Mobility GmbH, 80997 München (DE)
(72) Erfinder: BLASE, Bastian, 13187 Berlin (DE); BÜHS, Florian, 10777 Berlin (DE); EICHENAUER, Ruben, 15712 Zernsdorf (DE); FRANCKE, Jürgen, 12524 Berlin (DE); TOLKSDORF, Andre, 12555 Berlin (DE)
(74) Vertreter: Siemens Patent Attorneys
(86) Internationale Anmeldenummer: PCT/EP2019/073807
(87) Internationale Veröffentlichungsnummer: WO 2020/053084

(56) Entgegenhaltungen:
- CN-A- 107 933 324
- DE-A1- 102012 213 460
- DE-A1- 102013 214 022
- DE-A1- 102015 117 075
- FLORIAN BÜHS, GÖRAN KEIL BERLIN ET AL: "Stromabnehmer für schwere Nutzfahrzeuge", EB- ELEKTRISCHE BAHNEN DIV-DEUTSCHER INDUSTRIEVERLAG, DE, vol. 111, no. 4, 1 April 2013 (2013-04-01), pages 249 - 256, XP001582796, ISSN: 0013-5437
- ANONYMOUS: "E-LKW 20180923 121847743 - Oberleitungslastkraftwagen – Wikipedia", 23 September 2018 (2018-09-23), XP055638344, Retrieved from the Internet <URL:https://de.wikipedia.org/wiki/Oberleitungslastkraftwagen#/media/Datei:E-LKW_20180923_121847743.jpg> [retrieved on 20191101]

## Beschreibung

Die Erfindung betrifft einen Stromabnehmer für ein nicht spurgebundenes, elektrisch angetriebenes Fahrzeug nach dem Oberbegriff des Patentanspruches 1. Zudem betrifft die Erfindung ein Fahrzeug mit einem solchen Stromabnehmer.

Für den Transport von Gütern und die Beförderung von Personen sind elektrisch angetriebene Fahrzeuge mit Stromabnehmern zur Traktionsversorgung aus einer streckenseitigen Oberleitungsanlage aus dem schienengebundenen Eisenbahnverkehr seit langem bekannt. Ebenso sind spurgebundene Straßenfahrzeuge, insbesondere Busse, mit stangenförmigen Stromabnehmern zur Einspeisung elektrischer Energie aus einer Oberleitungsanlage bekannt geworden. Aufgrund der Gummibereifung derartiger Straßenfahrzeuge sind elektrifizierte Fahrstreifen mit einer zweipoligen Oberleitungsanlage erforderlich, die als Hin- und Rückleiter ausgebildete Fahrdrähte über diesem Fahrstreifen aufspannen. Seit geraumer Zeit sind auch nicht spurgebundene Straßenfahrzeuge, insbesondere Lastkraftwagen, mit einem dieselelektrischen Antrieb und einem zweipoligen Stromabnehmer mit je einer eigenen Kontaktwippe für jeden Fahrdraht bekannt. Ein Fahrzeug mit einem solchen Stromabnehmer ist aus der Veröffentlichung WO 2018/153983 A1 bekannt.

Die Offenlegungsschrift DE 10 2012 213 460 A1 offenbart ein nicht schienengebundenes Fahrzeug, insbesondere Lastkraftwagen oder Bus, mit einem Stromabnehmer zur Einspeisung elektrischer Energie aus einer zweipoligen Oberleitung, deren als Hin- und Rückleiter ausgebildete Fahrdrähte jeweils durch mindestens eine Schleifleiste des Stromabnehmers kontaktierbar sind. Der Stromabnehmer weist ein gelenkiges Traggestänge aus über ein Drehgelenk verbundenem Unter- und Oberarm auf, welches sich fahrzeugseitig auf eine Stellplattform abstützt und fahrdrahtseitig eine die Schleifleisten tragende Wippenanordnung trägt. Der Oberarm ist als trapezförmiger Tragrahmen mit zwei einen spitzen Winkel einschließenden Längsträgern sowie mit einem kurzen Querträger, der die Längsträger im Bereich des Drehgelenks verbindet, und mit einem langen Querträger, der die Längsträger im Bereich einer Wippenanordnung verbindet, ausgebildet. Zur Parallelführung der vier Schleifleisten beim Anheben und Absenken der Wippenanordnung sind die beiden Wippen untereinander und mit dem Oberarm über ein starres Führungsgestänge verbunden.

CN 107 933 324 A offenbart einen Doppelpantographen zur Stromversorgung eines auf einer Straße fahrenden Elektrofahrzeugs aus zwei über der Straße errichteten elektrischen Leitungen. Der Pantograph umfasst zwei nebeneinander angeordnete Kontaktbaugruppen mit Schleifleisten, wobei eine zur Verbindung mit einer stromführenden Leitung und die andere mit einer neutralen Leitung vorgesehen ist. Hierzu weist der Doppelpantograph einen Teleskopmechanismus mit einem unteren und einen oberen Hydraulikzylinder auf, die mit einem die Kontaktbaugruppen tragenden Traggestänge zum Anheben und Absenken derselben gekoppelt sind. Die beiden Kontaktbaugruppen sind über eine Verbindungsstange miteinander verbunden.

Die Offenlegungsschrift DE 10 2015 117 075 A1 betrifft einen Stromabnehmer mit einer Schleifleiste, die eine quer zum Verlauf des Fahrdrahtes in stromübertragenden Kontakt zum Fahrdraht bringbare Schleiffläche aufweist. Es ist eine Sensoranordnung zur Ermittlung der Lage des Fahrdrahtes bezogen auf die Schleifleiste offenbart, die fest am Stromabnehmer sitzt und einen Wert ermittelt, der der lateralen Position des Fahrdrahtes und/oder zumindest einer vertikalen Position des Fahrdrahtes in Bezug auf die Sensoranordnung entspricht.

Gegenüber dem schienengebundenen Eisenbahnverkehr hängt die Relativlage der Fahrdrähte der Oberleitungsanlage zu den Kontaktwippen des Stromabnehmers aufgrund der fehlenden Spurgebundenheit dieses bekannten Fahrzeugs entscheidend von seiner aktuellen seitlichen Abweichung aus der Spurmitte der elektrifizierten Fahrspur ab. Innerhalb eines Arbeitsbereiches der Schleifleisten der Kontaktwippen ist eine Abweichung des Fahrzeugs aus der Spurmitte tolerabel, ohne dass ein bestehender Kontakt zwischen Schleifleisten und Fahrdrähten eines angedrahteten Stromabnehmers unterbrochen wird oder die Kontaktherstellung eines anzudrahtenden Stromabnehmers misslingt. Um die Betriebssicherheit solcher nicht spurgebundenen Fahrzeuge während der Fahrt mit angedrahtetem Stromabnehmer und auch beim Andrahten des Stromabnehmers selbst zu erhöhen, bedient man sich Fahrerassistenzsysteme mit automatischer Spurhalteunterstützung sowie verschiedener Sensoreinrichtungen zur Bestimmung der aktuellen Relativlage des Fahrzeugs zu den Fahrdrähten der Oberleitungsanlage.

Der Erfindung liegt nun die Aufgabe zugrunde, einen Stromabnehmer der eingangs genannten Art mit erhöhter Betriebssicherheit bereitzustellen.

Diese Aufgabe wird durch einen Stromabnehmer gemäß Patentanspruch 1 gelöst. Ein solcher Stromabnehmer für ein nicht spurgebundenes, elektrisch angetriebenes Fahrzeug zur Einspeisung elektrischer Energie aus einer zweipoligen Oberleitungsanlage mit zwei Fahrdrähten umfasst ein gelenkiges Traggestänge, dass fahrdrahtseitig zwei nebeneinander angeordnete Kontaktwippen mit Schleifleisten trägt und fahrzeugseitig ein Basisgelenk zur Anlenkung an das Fahrzeug aufweist. Er umfasst ferner einen mit dem Traggestänge gekoppelten Hubantrieb zur Erzeugung eines die Kontaktwippen anhebenden Drehmoments im Basisgelenk. Erfindungsgemäß umfasst der Stromabnehmer eine Wippenbrücke, die als Eintauchschutz für einen seitlich zwischen den Kontaktwippen verlaufenden Fahrdraht ausgebildet ist, wobei die Wippenbrücke (12) zwei bezüglich der Fahrzeuglängsrichtung (10) quer verlaufende und hintereinander angeordnete Brückenbügel (14) und einen die Brückenbügel (14) mittig verbindenden Längslenker (16) aufweist, der an seinen Enden über Drehgelenke (18) mit vertikalen Drehachsen mit den Brückenbügeln (14) verbunden ist.

Das Fahrzeug kann als Straßenfahrzeug, insbesondere als Lastkraftwagen, ausgebildet sein. Der Stromabnehmer kann durch einen pantographenartigen Halbscherenstromabnehmer mit Unter- und Oberarm gebildet sein. Der Hubantrieb kann ein Luftfederbalg sein, durch den bei Druckbeaufschlagung die Kontaktwippen aus einer unteren Parkposition in eine obere Kontaktposition anhebbar sind, um polweise Kontakt zu den Fahrdrähten herzustellen beziehungsweise den Kontakt mit vorgebbarer Andruckkraft aufrechtzuerhalten. Die in Fahrzeuglängsrichtung nebeneinander angeordneten Kontaktwippen müssen aus Gründen der elektrischen und mechanischen Betriebssicherheit einen Sicherheitsabstand voneinander einhalten, wodurch ein Zwischenraum entsteht, in den - aus Sicht eines mit den Kontaktwippen verbundenen Bezugssystems - von oben durch eine gedachte, von den Schleifleisten aufgespannte Kontaktebene ein Fahrdraht eintauchen beziehungsweise einfädeln kann, was in der Folge zu einer Havarie von Stromabnehmer und Oberleitungsanlage führen kann. Die erfindungsgemäße Wippenbrücke verhindert bei einem seitlichen Abgleiten des Fahrdrahtes aus dem Arbeitsbereich der Schleifleisten oder beim Andrahten des Stromabnehmers in seitlich versetzter Fahrzeuglage durch Bilden einer mechanischen Rückhaltebarriere ein Eintauchen eines Fahrdrahtes in den Zwischenraum zwischen den Kontaktwippen. Die Betriebssicherheit von Fahrzeug und Stromabnehmer wird also erhöht, indem ein Andrahten eines Stromabnehmers in seitlicher Fehlstellung des Fahrzeugs oder eine starke Lenkbewegung des Fahrzeugs bei angedrahtetem Stromabnehmer nicht dazu führen kann, dass ein Fahrdraht zwischen die Kontaktwippen geraten kann.

Einerseits erhöht die durch zwei Brückenbügel gebildete Redundanz die Tragfähigkeit der Wippenbrücke und damit die Betriebssicherheit des Stromabnehmers. Andererseits ist der Auflagepunkt eines Fahrdrahtes auf einem Brückenbügel der Wippenbrücke in Fahrzeuglängsrichtung nur geringfügig versetzt gegenüber den Auflagepunkten auf der nächstliegenden Schleifleiste der Kontaktwippen. Hierdurch wird die Gefahr eines Einfädelns eines von einer Schleifleiste abrutschenden Fahrdrahtes bei starkem Wippen einer Kontaktwippe um ihre sich in Fahrzeugquerrichtung erstreckende Wippenachsen reduziert.

Indem die Wippenbrücke einen die Brückenbügel mittig verbindenden Längslenker aufweist, der an seinen Enden über Drehgelenke mit vertikalen Drehachsen mit den Brückenbügeln verbunden ist, wird die gegenseitige Lage der Brückenbügel stabilisiert und gleichzeitig eine gegenseitige Relativbewegung der Kontaktwippen in Fahrzeuglängsrichtung erlaubt, da die Verbindungen nicht starr ausgebildet sind.

In einer besonderen Ausführungsart des erfindungsgemäßen Stromabnehmers ist die Wippenbrücke an den Kontaktwippen befestigt und derart geformt, dass in Fahrzeuglängsrichtung gesehen Schleifleisten und Wippenbrücke eine lückenlose, glatte Auflagekurve für die Fahrdrähte bilden. Indem die Wippenbrücke an den Kontaktwippen befestigt ist, kann sie deren Hub- und Federbewegungen folgen, so dass in jedem Betriebszustand des Fahrzeugs eine durchgängige und glatte Auflagekurve für die Fahrdrähte gegeben ist, die durch eine Projektion der Schleifleisten der Kontaktwippen und der Wippenbrücke in Fahrzeuglängsrichtung auf eine sich senkrecht zur Fahrzeuglängsrichtung erstreckende Projektionsfläche gebildet ist. Die Form der Wippenbrücke ist so gestaltet, dass die Auflagekurve lückenlose und glatt verläuft, um einen weichen Übergang eines Fahrdrahtes zwischen Kontaktwippen und Wippenbrücke zu ermöglichen.

In einer weiteren besonderen Ausführungsart des erfindungsgemäßen Stromabnehmers weist die Wippenbrücke Stützelemente auf, über die sich die Brückenbügel an den Kontaktwippen abstützen, wobei Endabschnitte der Brückenbügel in an den Stützelementen angeordneten Kugelgelenken gelagert sind. Die Stützelemente erlauben eine Befestigung der Brückenbügel an Strukturen der Kontaktwippen und eine Positionierung der Brückenbügel zur Bildung der Auflagekontur mit den Schleifleisten. Außerdem ermöglichen die Kugelgelenke eine gegenseitige Relativbewegung der Kontaktwippen untereinander trotz ihrer Verbindung durch die Wippenbrücke.

In einer weiteren besonderen Ausführungsart des erfindungsgemäßen Stromabnehmers sind die Endabschnitte der Brückenbügel in Richtung einer Endabschnittsachse verschieblich durch die Kugelgelenke geführt. Durch den zusätzlichen linearen Freiheitsgrad im Kugelgelenk wird die Relativbeweglichkeit der Kontaktwippen noch weiter erhöht, insbesondere wenn die Kontaktwippen sich im Fahrbetrieb aufeinander zu- oder voneinander wegbewegen.

In einer weiteren besonderen Ausführungsart des erfindungsgemäßen Stromabnehmers sind die Brückenbügel elektrisch leitend und die Stützelemente sowie der Längslenker elektrisch isolierend ausgebildet, wobei die Brückenbügel mit einem Fahrdrahtsensor zur Erfassung eines Kontaktes eines Fahrdrahtes mit den Brückenbügeln verbunden sind. Der Fahrdrahtsensor kann als elektrischer Leitfähigkeitssensor ausgebildet sein, der erfasst, wenn ein Fahrdraht auf beiden Brückenbügeln aufliegt und diese dadurch leitend verbindet. Dies ermöglicht die sensorielle Erfassung einer gefährlichen Betriebssituation, nämlich ein seitliches Verlassen eines Fahrdrahtes zwischen die Kontaktwippen oder ein Andrahten eines Stromabnehmers zwischen den Kontaktwippen, was zur Auslösung eines automatischen Absenkens oder Schnellabsenkens des Stromabnehmers genutzt werden kann.

In einer weiteren besonderen Ausführungsart des erfindungsgemäßen Stromabnehmers weist jede der beiden Kontaktwippen zwei in Fahrzeuglängsrichtung hintereinander angeordnete Schleifleisten auf, an deren seitlichen Enden je ein nach unten gebogenes Endhorn angeordnet ist, wobei zwischen wenigstens einer Schleifleiste und mindestens einem Endhorn ein zweiter Fahrdrahtsensor mit einem induktiven Wirkbereich angeordnet ist, der zur Erfassung eines im Wirkbereich verlaufenden Fahrdrahts ausgebildet ist. Hierdurch kann insbesondere erfasst werden, wenn ein Fahrdraht im Fahrbetrieb seitlich den Arbeitsbereich einer Schleifleiste nach außen verlassen hat, um ein automatisches Absenken oder Schnellabsenken auszulösen.

Weitere Eigenschaften und Vorteile der Erfindung ergeben sich aus nachfolgender Beschreibung eines Ausführungsbeispiels anhand der Zeichnungen, in deren
- FIG 1: ein Stromabnehmer in angedrahtetem Zustand und
- FIG 2: der Stromabnehmer mit Wippenbrücke in perspektivischer Ansicht
schematisch veranschaulicht sind.

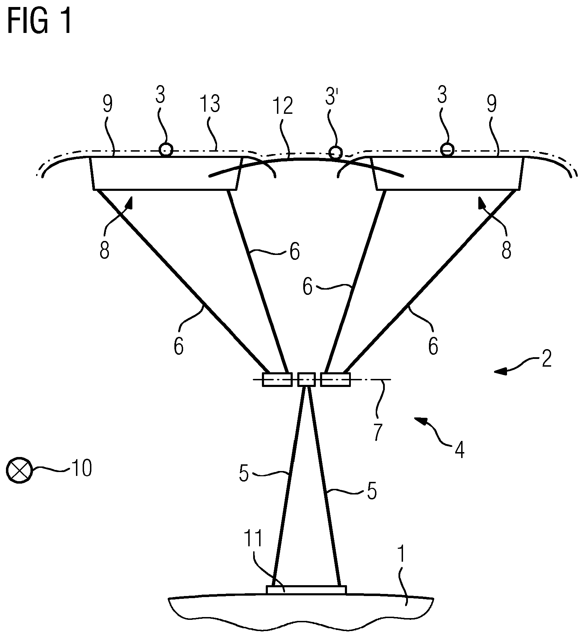

Gemäß FIG 1 umfasst ein nicht spurgebundenes, elektrisch angetriebenes Fahrzeug 1, beispielsweise ein Lastkraftwagen mit dieselelektrischem Antrieb, einen Stromabnehmer 2, über den auch während der Fahrt elektrische Energie aus einer Oberleitungsanlage einspeisbar ist. Die Oberleitungsanlage ist zweipolig ausgebildet und umfasst über einer Fahrspur verlaufende, als Hin- und Rückleiter ausgebildete Fahrdrähte 3 zur Bereitstellung elektrischer Energie. Der dargestellte Stromabnehmer 2 ist als Halbscherenpantograph ausgebildet und umfasst ein gelenkiges Traggestänge 4 mit einem Unterarm 5 und zwei Oberarmen 6, die jeweils über eine am Unterarm 5 angeordnete Achse 7 schwenkbar mit diesem verbunden sind. Jeder der beiden Oberarme 6 trägt fahrdrahtseitig eine Kontaktwippe 8 mit zwei parallelen Schleifleisten 9, die quer zu einer Fahrzeuglängsachse 10 hintereinander angeordnet sind. Zur Anlenkung des Stromabnehmers 2 an das Fahrzeug 1 ist der Unterarm 5 fahrzeugseitig über ein Basisgelenk 11 mit dem Fahrzeug 1 schwenkbar verbunden, beispielsweise über ein in FIG 1 abschnittsweise dargestelltes Fahrzeugdach. Mit dem Traggestänge 5 ist ein an sich bekannter und daher nicht näher dargestellter Hubantrieb so gekoppelt, dass die Kontaktwippen 8 anhebbar sind. Der Hubantrieb kann als Luftfederbalg ausgebildet sein, der bei Druckbeaufschlagung über geeignete mechanische Koppelmittel ein die Kontaktwippen 8 anhebendes Drehmoment im Basisgelenk 11 erzeugt.

In einer unteren Parkposition der Kontaktwippen 8 ist das Traggestänge 5 des abgedrahteten Stromabnehmers 2 zusammengeklappt, so dass das Fahrzeug 1 die für einen Betrieb außerhalb elektrifizierter Fahrstrecken einzuhaltenden, maximal zulässigen Fahrzeugabmessungen nicht überschreitet und der Stromabnehmer 2 sich in einem elektrisch gesicherten Zustand befindet. Beim Andrahten des Stromabnehmers 2 wird der Unterarm 5 aufgerichtet, wobei nicht dargestellte Zugstangen ein Aufrichten der Oberarme 7 erzwingen, bis die Kontaktwippen 8 ihre in FIG 1 dargestellte obere Kontaktposition erreicht haben, in der ein elektrischer Kontakt zwischen Schleifleisten 9 und Fahrdrähten 3 hergestellt ist. Hierfür ist es erforderlich, dass das Fahrzeug 1 sich hinreichend mittig in der elektrifizierten Fahrspur befindet, damit die Kontaktstellen der Fahrdrähte 3 innerhalb eines Arbeitsbereichs der Schleifleisten 9 zu liegen kommen. Erfindungsgemäß umfasst der Stromabnehmer 2 eine Wippenbrücke 12, die als Eintauchschutz für einen seitlich zwischen den benachbarten Kontaktwippen 8 verlaufenden Fahrdraht 3' ausgebildet ist. Ein Fahrdraht 3 kann in die in FIG 1 angedeutete Lage des Fahrdrahtes 3' sowohl beim Andrahten des Stromabnehmers 2 als auch in angedrahtetem Zustand des Stromabnehmers 2 geraten, wenn das Fahrzeug 1 und damit der Stromabnehmer 2 seitlich zu stark aus der Spurmitte der elektrifizierten Fahrspur fährt. Die Wippenbrücke 2 verhindert ein Aufsteigen der Kontaktwippen 8 aufgrund der vom Hubantrieb vermittelten Hubkraft der Kontaktwippen 8 und damit ein Eindringen des Fahrdrahtes 3' in den Zwischenraum zwischen den Kontaktwippen 8, was sonst zu schweren Beschädigungen an Stromabnehmer 2 und Oberleitungsanlage führen könnte. Die Wippenbrücke 12 ist an den Kontaktwippen 8 befestigt, um ein gegenseitiges Ausrichten der Kontaktwippen 8 bei Andrücken an eines Fahrdrahtes 3' an die Wippenbrücke 12 zu erreichen. Die Wippenbrücke 12 ist derart geformt und angeordnet, dass in Fahrzeuglängsrichtung 10 gesehen Schleifleisten 9 und Wippenbrücke 12 eine lückenlose, glatte Auflagekurve 13 für die Fahrdrähte 3 bzw. 3' bilden. Hierdurch wird ein weiches Überführen eines Fahrdrahtes 3' zwischen den benachbarten Kontaktwippen 8 erzielt, ohne dass die Bewegungen der Kontaktwippen 8 im Normalbetrieb durch die Wippenbrücke 12 beeinflusst wird.

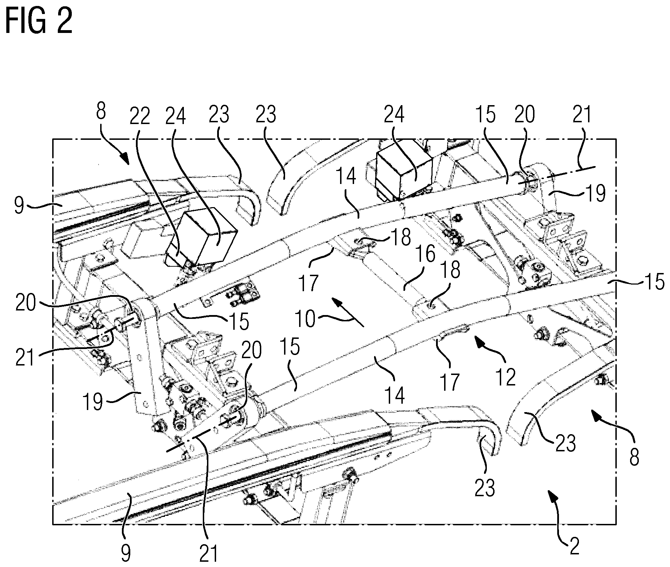

Gemäß FIG 2 weist die Wippenbrücke 12 zwei bezüglich der Fahrzeuglängsrichtung 10 quer verlaufende und hintereinander angeordnete Brückenbügel 14 auf. Die rohrförmigen Brückenbügel 14 sind mittig leicht gebogen und fallen in Richtung ihrer seitlichen Endabschnitte 15 leicht nach unten ab. Im Bereich der Biegungen sind die Brückenbügel 14 durch einen stangenförmigen Längslenker 16 über von unten die Brückenbügel 14 umgreifende Klammerelemente 17 verbunden. Jedes Klammerelement 17 ist mit je einem Ende des Längslenkers 16 über ein Drehgelenk 18 mit vertikaler Drehachse gekoppelt. Die Wippenbrücke 2 weist ferner Stützelemente 19 auf, über die sich die Brückenbügel 14 an den benachbarten Kontaktwippen 8 abstützen. Dabei sind die Endabschnitte 15 der Brückenbügel 14 in Kugelgelenken 20 gelagert, die in den Stützelementen 19 angeordneten sind. Dünnschaftige Abschlüsse der Endabschnitte 15 sind in Richtung einer Endabschnittsachse 21 verschieblich durch die Kugelgelenke 20 geführt. Durch ihre gelenkigen Verbindungen und Bewegungsfreiheitsgrade erlaubt die Wippenbrücke 12 Relativbewegungen der Kontaktwippen 8 und sorgt für deren gegenseitige Ausrichtung.

Wenn die Brückenbügel 14 elektrisch leitend und die Stützelemente 19 sowie der Längslenker 16 elektrisch isolierend ausgebildet sind, können die Brückenbügel 14 mit einem Fahrdrahtsensor zur Erfassung eines Kontaktes eines Fahrdrahtes 3 mit den Brückenbügeln 14 verbunden werden. Der Fahrdrahtsensor, der in FIG 2 nicht selbst sondern lediglich sein Anschluss 22 an den Brückenbügeln 14 dargestellt ist, kann als elektrischer Leitfähigkeitssensor ausgebildet sein, der detektiert, wenn das Fahrzeug 1 mit angedrahtetem Stromabnehmer 2 soweit aus der Spurmitte abweicht, dass ein Fahrdraht 3 den Arbeitsbereich einer Schleifleiste 9 verlassen hat und die beiden Brückenbügel 14 elektrisch leitend miteinander verbindet. In diesem Fall kann eine automatische Absenkung des Stromabnehmers 2 ausgelöst werden. Vorzugsweise weist jede der beiden Kontaktwippen 8 zwei in Fahrzeuglängsrichtung 10 hintereinander angeordnete Schleifleisten 9 auf. An den seitlichen Enden der Schleifleisten 9 sind nach unten gebogene Endhörner 23 angeordnet. Die Sensorik kann verbessert werden, indem zwischen wenigstens einer Schleifleiste 9 und mindestens einem Endhorn 23, vorzugsweise den äußeren Endhörnern 23, ein zweiter Fahrdrahtsensor 24 mit einem induktiven Wirkbereich angeordnet ist, der zur Erfassung eines im Wirkbereich verlaufenden Fahrdrahts 3 ausgebildet ist.

## Patentansprüche

1. Stromabnehmer (2) für ein nicht spurgebundenes, elektrisch angetriebenes Fahrzeug (1) zur Einspeisung elektrischer Energie aus einer zweipoligen Oberleitungsanlage mit zwei Fahrdrähten (3), umfassend
- ein gelenkiges Traggestänge (4), das fahrdrahtseitig zwei nebeneinander angeordnete Kontaktwippen (8) mit Schleifleisten (9) trägt und fahrzeugseitig ein Basisgelenk (11) zur Anlenkung an das Fahrzeug (1) aufweist, und
- einen mit dem Traggestänge (4) gekoppelten Hubantrieb zur Erzeugung eines die Kontaktwippen (8) anhebenden Drehmoments im Basisgelenk (11),
- eine als Eintauchschutz für einen seitlich zwischen den Kontaktwippen (8) verlaufenden Fahrdraht (3') ausgebildete Wippenbrücke (12),
**gekennzeichnet dadurch, dass** die Wippenbrücke (12) zwei bezüglich der Fahrzeuglängsrichtung (10) quer verlaufende und hintereinander angeordnete Brückenbügel (14) und einen die Brückenbügel (14) mittig verbindenden Längslenker (16) aufweist, der an seinen Enden über Drehgelenke (18) mit vertikalen Drehachsen mit den Brückenbügeln (14) verbunden ist.

2. Stromabnehmer (2) nach Anspruch 1, wobei die Wippenbrücke (12) an den Kontaktwippen (8) befestigt und derart geformt ist, dass in Fahrzeuglängsrichtung (10) gesehen Schleifleisten (9) und Wippenbrücke (12) eine lückenlose, glatte Auflagekurve (13) für die Fahrdrähte (3, 3') bilden.

3. Stromabnehmer (2) nach einem der vorstehenden Ansprüche, wobei die Wippenbrücke (12) Stützelemente (19) aufweist, über die sich die Brückenbügel (14) an den Kontaktwippen (8) abstützen, wobei Endabschnitte (15) der Brückenbügel (14) in an den Stützelementen (19) angeordneten Kugelgelenken (20) gelagert sind.

4. Stromabnehmer (2) nach Anspruch 3, wobei die Endabschnitte (15) der Brückenbügel (14) in Richtung einer sich längs dünnschaftiger Abschlüsse der Endabschnitte (15) erstreckenden Endabschnittsachse (21) verschieblich durch die Kugelgelenke (20) geführt sind.

5. Stromabnehmer (2) nach Anspruch 3 oder 4,
- wobei die Brückenbügel (14) elektrisch leitend und die Stützelemente (19) sowie der Längslenker (16) elektrisch isolierend ausgebildet sind, und
- wobei die Brückenbügel (14) mit einem Fahrdrahtsensor zur Erfassung eines Kontaktes eines Fahrdrahtes (3') mit den Brückenbügeln (14) verbunden sind.

6. Stromabnehmer (2) nach einem der vorstehenden Ansprüche,
- wobei jede der beiden Kontaktwippen (8) zwei in Fahrzeuglängsrichtung (10) hintereinander angeordnete Schleifleisten (9) aufweist, an deren seitlichen Enden je ein nach unten gebogenes Endhorn (23) angeordnet ist,
- wobei zwischen wenigstens einer Schleifleiste (9) und mindestens einem Endhorn (23) ein zweiter Fahrdrahtsensor (24) mit einem induktiven Wirkbereich angeordnet ist, der zur Erfassung eines im Wirkbereich verlaufenden Fahrdrahts (3) ausgebildet ist.

## Claims

1. Current collector (2) for a non-rail-bound, electrically driven vehicle (1) for feeding electrical energy from a two-pole overhead line installation with two contact wires (3), comprising
- an articulated supporting frame (4), which supports two contact rockers (8), which are arranged next to one another, with contact strips (9) on the contact wire side, and has a base joint (11) for linking to the vehicle (1) on the vehicle side, and
- a lifting drive coupled to the supporting frame (4) for generating a torque, which lifts the contact rockers (8), in the base joint (11),
- a rocker bridge (12) embodied as immersion protection for a contact wire (3') running laterally between the contact rockers (8),
**characterised in that** the rocker bridge (12) has two bridge brackets (14), which run transversely and are arranged one behind the other in relation to the vehicle longitudinal direction (10), and a longitudinal control arm (16), which connects the bridge brackets (14) centrally and is connected to the bridge brackets (14) at its ends via rotary joints (18) with vertical axes of rotation.

2. Current collector (2) according to claim 1, wherein the rocker bridge (12) is fastened to the contact rockers (8) and is shaped in such a manner that, when viewed in the vehicle longitudinal direction (10), contact strips (9) and rocker bridges (12) form a seamless, smooth contact curve (13) for the contact wires (3, 3').

3. Current collector (2) according to one of the preceding claims, wherein the rocker bridge (12) has supporting elements (19), via which the bridge brackets (14) brace against the contact rockers (8), wherein end sections (15) of the bridge brackets (14) are mounted in ball joints (20) arranged on the supporting elements (19).

4. Current collector (2) according to claim 3, wherein the end sections (15) of the bridge brackets (14) are guided such that they can be displaced by the ball joints (20) in the direction of an end section axis (21) that extends along thin-shafted ends of the end sections (15).

5. Current collector (2) according to claim 3 or 4,
- wherein the bridge brackets (14) are embodied as being electrically conductive, and the supporting elements (19) as well as the longitudinal control arm (16) are embodied as being electrically isolating, and
- wherein the bridge brackets (14) are connected to a contact wire sensor for detecting contact between a contact wire (3') and the bridge brackets (14).

6. Current collector (2) according to one of the preceding claims,
- wherein each of the two contact rockers (8) has two contact strips (9), which are arranged one behind the other in the vehicle longitudinal direction (10) and on the lateral ends of which a downwardly curved end horn (23) is arranged in each case,
- wherein a second contact wire sensor (24), with an inductive operating range that is embodied to detect a contact wire (3) running in the operating range, is arranged between at least one contact strip (9) and at least one end horn (23).

## Revendications

1. Pantographe (2) pour un véhicule (1) à traction électrique non guidé sur rail pour l'alimentation en énergie électrique à partir d'une installation bipolaire de ligne de contact ayant deux fils (3) de contact, comprenant
- une barre (4) support articulée, qui porte, du côté des fils de contact, deux archets (8) de contact disposés l'un à côté de l'autre et ayant des frotteurs (9) et, du côté du véhicule, une articulation (11) de base pour l'articulation au véhicule (1), et
- un entraînement de levage accouplé à la barre (4) de support pour la production dans l'articulation (11) de base d'un couple soulevant les archets (8) de contact,
- un pont (12) d'archet constitué pour un fil (3') de contact s'étendant latéralement entre les archets (8) de contact,
**caractérisé en ce que** le pont (12) d'archet a deux branches (14) de pont s'étendant transversalement par rapport à la direction (10) longitudinale du véhicule et disposées l'une derrière l'autre et un guidage (16) longitudinal, qui relie au milieu les branches (14) du pont et qui, à ses extrémités, est assemblé aux branches (14) du pont par des articulations (18) pivotantes à axe d'articulation vertical.

2. Pantographe (2) suivant la revendication 1, dans lequel le pont (12) d'étrier est fixé aux étriers (8) de contact et est conformé, de manière à ce que, considéré dans la direction (10) longitudinale du véhicule, frotteurs (9) et pont (12) d'étrier forment pour les fils (3, 3') de contact, une courbe (13) d'application lisse sans lacune.

3. Pantographe (2) suivant l'une des revendications précédentes, le pont (12) d'archet a des éléments (19) d'appui, par lesquels l'étrier (14) de pont s'appuie sur les étriers (8) de contact, dans lequel des tronçons (15) d'extrémité de l'étrier (14) de pont sont montés dans des rotules (20) disposées sur les éléments (19) d'appui.

4. Pantographe (2) suivant la revendication 3, dans lequel les tronçons (15) d'extrémité de l'étrier (14) de pont sont, dans la direction d'un axe (21) de tronçon d'extrémité, s'étendant le long de terminaisons en fût mince des tronçons (15) d'extrémité, guidés à coulissement par les rotules (20).

5. Pantographe (2) suivant la revendication 3 ou 4,
- dans lequel les branches (14) du pont sont conductrices de l'électricité et les éléments (19) d'appui ainsi que le guidage (16) longitudinal sont isolés électriquement, et
- dans lequel l'étrier (14) de pont est relié à un capteur de fil de contact pour la détection d'un contact d'un fil (3') de contact avec les étriers (14) du pont.

6. Pantographe (2) suivant l'une des revendications précédentes,
- dans lequel chacun des deux étriers (8) de contact a deux frotteurs (9), qui sont disposés l'un derrière l'autre dans la direction (10) longitudinale du véhicule, aux extrémités latérales desquelles est montée respectivement une corne (23) d'extrémité courbée vers le bas,
- dans lequel, entre au moins un frotteur (9) et au moins une corne (23) d'extrémité, est disposé un deuxième capteur (24) de fil de contact ayant une partie active inductive, qui est constituée pour la production d'un fil (3) de contact s'étendant dans la partie active pour la détection..
